# EUROPEAN PATENT SPECIFICATION

(11) **EP 1 683 816 B1**
(45) Date of publication and mention of the grant of the patent: **06.01.2010**
(21) Application number: 04818562.3
(22) Date of filing: 11.11.2004
(51) Int. Cl.: C08F 8/32, C08G 59/50, C08L 33/00, C08L 75/04

(54) **POLYACRYLIC HYDRAZIDE AND CROSSLINKING OR CURING AGENT FOR RESIN**
POLYACRYLHYDRAZID UND VERNETZER ODER HÄRTER FÜR HARZ
HYDRAZIDE POLYACRYLIQUE ET AGENT DE RETICULATION OU DE DURCISSEMENT POUR RESINE

(30) Priority: 12.11.2003 JP 2003382104
(43) Date of publication of application: 26.07.2006
(73) Proprietor: Otsuka Chemical Co., Ltd., Osaka-shi, Osaka 540-0021 (JP)
(72) Inventor: ABE, Yoshinobu, Otsuka Chemical Co., Ltd., Tokushima-shi, Tokushima 771-0193 (JP); KITAJIMA, Takashi, Otsuka Chemical Co., Ltd., Tokushima-shi, Tokushima 771-0193 (JP)
(74) Representative: Barz, Peter
(86) International application number: PCT/JP2004/017109
(87) International publication number: WO 2005/047347

(56) References cited:
- JP-A- 7 010 948
- JP-A- 10 152 639
- JP-A- 56 002 306
- JP-A- 56 103 203
- JP-A- 56 131 603
- JP-A- 60 202 108
- JP-A- 62 146 903
- US-A- 4 171 413
- DATABASE WPI Week 198719 Derwent Publications Ltd., London, GB; AN 1987-132584 XP002413791 -& JP 62 072742 A (MITSUBISHI YUKA BADISCHE KK) 3 April 1987 (1987-04-03)
- DATABASE WPI Week 198547 Derwent Publications Ltd., London, GB; AN 1985-293347 XP002413771 -& JP 60 202108 A (MITSUBISHI RAYON CO LTD) 12 October 1985 (1985-10-12)
- DATABASE WPI Week 198322 Derwent Publications Ltd., London, GB; AN 1983-52998K XP002413772 -& JP 58 069232 A (OTSUKA KAGAKU YAKUHIN KK) 25 April 1983 (1983-04-25)
- DATABASE WPI Week 199150 Derwent Publications Ltd., London, GB; AN 1991-365128 XP002413909 -& JP 03 244665 A (NIPPON SHOKUBAI CO LTD) 31 October 1991 (1991-10-31)

## Description

### Field of the Invention

The present invention relates to polyacrylic hydrazide, crosslinking or curing agents for resins, resin compositions thereof and crosslinked or cured products thereof.

### Background Art

In recent years, there is an increased concern over the circumstances so that great efforts have been made to reduce environmental loads by preventing the spread of volatile organic compounds into the air from adhesives and coating compositions in the fields of construction and coating materials. In this situation, attention is directed in the field of coating materials to aqueous coating compositions not containing an organic solvent. However, the use of aqueous coating compositions has been limited generally because of their defects of taking a long time in drying and giving a low water resistance to the coating film.

Proposed methods of increasing the water resistance of aqueous coating compositions include, for example, the use of a water resistant resin composition comprising polyvinyl alcohol-based resin and polyacrylic hydrazide having a number average polymerization degree of 30 or higher (e.g. cf. patent literature 1) .

The polyacrylic hydrazide is a polymer which can be prepared, e.g., by reacting hydrazine with polyacrylic amide or methyl polyacrylate or like polyacrylic ester. For example, when using polyacrylic amide having a monomeric unit of the formula (1) as the raw material, it is a polymer of the formula (2), wherein m + n = 100 mole% and the value of m is defined as hydrazide conversion ratio (mole%).

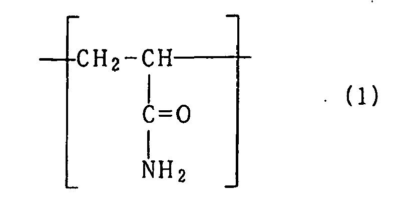

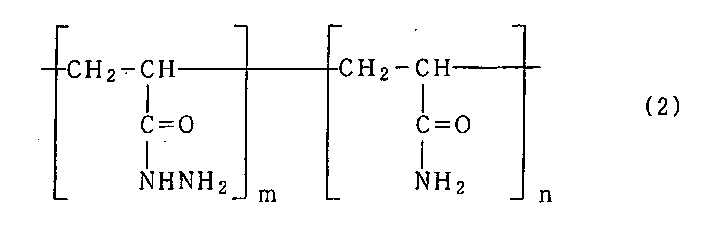

The polyacrylic hydrazide referred to in the present invention comprises carboxylic acid wherein an amide portion or an ester portion all or part of which has been hydrolyzed, the carboxylic acid being made into alkali metal salt or alkaline earth metal salt to increase the stability.

The polyacrylic hydrazide is termed N-aminopolyacrylamide as in patent literature 1, or is called acrylic acid hydrazide-based copolymer.

In patent literature 1, the polyacrylic hydrazide is used as a crosslinking agent for polyvinyl alcohol-based resin. However, in patent literature 1, the polyacrylic hydrazide is described to have a number average polymerization degree of 30 to 300,000, preferably 50 to 100,000. When the hydrazide conversion ratio is calculated as 100 mole%, the monomer unit has an average molecular weight of 86 so that the average molecular weight of the polymer (average molecular weight of monomer unit X polymerization degree) is in an extremely wide range of 2,580 to 25,800,000, preferably 4,300 to 8,600,000.

The polyacrylic hydrazide used in an example of patent literature 1 has a polymerization degree of 100 and a hydrazide conversion ratio of 10.0 mole%, namely an average molecular weight of 7,250. In addition, the polyacrylic hydrazide having a polymerization degree of 40,000 is used but the hydrazide conversion ratio thereof is not disclosed. However, if the hydrazide conversion ratio is 10%, the average molecular weight is 2,900,000, whereas if the hydrazide conversion ratio is 100%, the average molecular weight is 3,440,000.

As set forth above, the polyacrylic hydrazides described in patent literature 1 have an average molecular weight in the wide range of 2,580 to 25,800,000, and the working examples show only two kinds of polyacrylic hydrazides having two extremes of average molecular weight, namely about 7,250 and about 2,900,000.

In the invention, it was found that polyacrylic hydrazides having an average molecular weight in a specific range of 70,000 to 150,000 among the polyacrylic hydrazides stated in patent literature 1 are useful as a crosslinking or curing agent for resin coating films which exhibit excellent water resistance. Then the invention was completed based on the finding. The present applicant has filed many patent applications relating to polyacrylic hydrazides (e.g. cf. patent literature 2-13).

Patent literature 2 to 6, however, disclose polyacrylic hydrazides having an average molecular weight of 10,000 to 13,000; patent literature 7 discloses polyacrylic hydrazides having an average molecular weight of 45,000 and 200,000; patent literature 8 to 11 disclose polyacrylic hydrazides having an average molecular weight of 45,000, 300,000 to 310,000 and 5,000,000; and patent literature 12 and 13 disclose polyacrylic hydrazides having an average molecular weight of 40,000, and 200,000 to 500,000 but none of these patent documents disclose polyacrylic hydrazides having an average molecular weight of 70,000 to 150,000.

An object of the invention is to provide a crosslinking agent or a curing agent for resins, the agent containing as an active component a polyacrylic hydrazide having a narrowly specifically limited average molecular weight which is not disclosed in the prior art documents.

Another object of the invention is to provide a novel polyacrylic hydrazide having a specific average molecular weight which is not disclosed in the prior art documents.
[Patent literature 1] Patent No.3357887 (claims, examples 1 and 2)
[Patent literature 2] JP 60-23705B (reference examples 1 to 4)
[Patent literature 3] JP 60-45205B (claims)
[Patent literature 4] JP 54-20090A (reference examples 1 to 5)
[Patent literature 5] JP 54-21493A (reference examples 1 to 4)
[Patent literature 6] JP 60-28309B (reference examples 1 to 3)
[Patent literature 7] JP 63-34882B (reference examples 1 to 3)
[Patent literature 8] JP 55-3440A (reference examples 1 to 4)
[Patent literature 9] JP 62-21001B (reference examples 1 to 3)
[Patent literature 10] JP 62-4047B (claims, examples 1 to 3)
[Patent literature 11] JP 61-39980B (reference examples 1 to 3)
[Patent literature 12] JP 1990-43765B (reference examples 1 to 4)
[Patent literature 13] JP 1991-58800B (page 3, left col., line 26)

JP-A-7010948 discloses an aqueous coating dispersion comprising a curable urethane resin and a hydrazine derivative as the main ingredients.

JP-A-56103203 discloses a gel useful as a water absorbing agent for soil which is obtained by reacting a polyacrylic acid hydrazide with an acid anhydride, epihalohydrin and maleic anhydride polymer and gelatinising the reaction product.

JP-A-60202108 discloses preparation of a poly(meth) acrylic acid hydrazide by reacting an alkyl(meth)acrylate or (meth)acrylic acid and hydrazine hydrate in the absence of a catalyst.

### Disclosure of the Invention

The invention includes the following.
1. A crosslinking agent or a curing agent for resins, the agent containing as an active component a polyacrylic hydrazide having a number average molecular weight of 70,000 to 150,000, a hydrazide conversion ratio of at least 45% and 400 or more hydrazide groups in one molecule.
2. A crosslinking agent or a curing agent for resins, the agent containing as an active component a polyacrylic hydrazide having a number average molecular weight of 80,000 to 110,000, a hydrazide conversion ratio of at least 45% and 450 or more hydrazide groups in one molecule.
3. A crosslinking agent or a curing agent for resins, the agent containing as an active component a polyacrylic hydrazide having a number average molecular weight of 80,000 to 90,000, a hydrazide conversion ratio of at least 50% and 500 or more hydrazide groups in one molecule.
4. A resin composition comprising at least one kind of resin selected from an acrylic resin having at least one carbonyl group in the molecule, a urethane resin and an epoxy resin, and the crosslinking agent or the curing agent as defined in items 1-3.
5. A crosslinked or cured product formed by crosslinking or curing at least one kind of resin selected from an acrylic resin having at least one carbonyl group in the molecule, a urethane resin and an epoxy resin using the crosslinking agent or the curing agent as defined in items 1-3.

The present inventors found that when using a polyacrylic hydrazide having a specific average molecular weight and a specific hydrazide conversion ratio as a crosslinking agent or a curing agent for resins, e.g. a drying time is shortened and a remarkable water resistance is imparted to a resin coating film. It was also found that an excellent resin coating film having a high acid resistance and a high alkali resistance can be provided.

The term "average molecular weight" used in the present specification means a number average molecular weight. The value was measured by GPC (gel permeation chromatography). The measuring equipment is LC 10A system (product of Simadzu Mfg. Co., Ltd.). Column: TSK-GEL α-2500, TSK-GEL α-4000, TSK-GEL α-6000 (product of TOSO Co., Ltd.).
Standard: Polyoxyethylene oxide (TSK standard PEO kit, product of TOSO Co., Ltd.)

The polyacrylic hydrazide can be prepared by conventional methods, e.g. by reacting hydrazine with polyacrylic amide or methyl polyacrylate or like polyacrylic ester having an average molecular weight of 6,000 to 150,000. The reaction can be conducted, e.g. by dissolving 1 mole of polyacrylic amide in water or an aqueous solution of methanol to give a polymer concentration of 20 to 40 wt%, adding 1 to 3 moles of hydrazine to polyacrylic amide, and conducting a reaction usually at 50 to 100°C for about 3 to about 20 hours.

When the average molecular weight is less than 10,000, satisfactory water resistance, acid resistance and alkali resistance can not be imparted. If the average molecular weight exceeds 150,000, not only a sufficient effect can not be achieved as to water resistance, acid resistance, alkali resistance, but also the polyacrylic hydrazide shows a markedly low water solubility, resulting in need for a large amount of water as a solvent, and therefore in need for a longer time in drying.

If the hydrazide conversion ratio is below 30%, the following problem arises. Even if the above-defined average molecular weight is in the above-specified range, it is impossible to afford good water resistance, acid resistance and alkali resistance.

To give higher water resistance, acid resistance and alkali resistance, it is necessary to use polyacrylic hydrazide having more than 85 hydrazide groups in one molecule.

For example, when there are 85 hydrazide groups in polyacrylic hydrazide having an average molecular weight of 10,000, the hydrazide conversion ratio is about 70%.

A preferred polyacrylic hydrazide to be used in the invention has an average molecular weight of 70,000 to 150,000, a hydrazide conversion ratio of 45 to 98% and 405 to 1715 hydrazide groups in one molecule.

A more preferred polyacrylic hydrazide to be used in the invention has an average molecular weight of 80,000 to 110,000, a hydrazide conversion ratio of 45 to 98% and 463 to 1257 hydrazide groups in one molecule.

A more preferred polyacrylic hydrazide to be used in the invention has an average molecular weight of 80,000 to 90,000, a hydrazide conversion ratio of 50 to 98% and 509 to 1029 hydrazide groups in one molecule.

A further preferred polyacrylic hydrazide to be used in the invention has an average molecular weight of 70,000 to 150,000, a hydrazide conversion ratio of 45 to 90% and 405 to 1597 hydrazide groups in one molecule.

A further preferred polyacrylic hydrazide to be used in the invention has an average molecular weight of 80,000 to 110,000, a hydrazide conversion ratio of 45 to 90% and 463 to 1171 hydrazide groups in one molecule.

A further preferred polyacrylic hydrazide to be used in the invention has an average molecular weight of 80,000 to 90,000, a hydrazide conversion ratio of 50 to 90% and 509 to 958 hydrazide groups in one molecule.

The polyacrylic hydrazide for use herein is excellent in water solubility and can be used as a highly concentrated aqueous solution.

Resins for use in the invention are not limited insofar as the resins are polymers which have a reaction portion of aldehyde-based or ketone-based carbonyl group, an epoxy group or an isocyanate group reactive with a hydrazide group of polyacrylic hydrazide. Examples are acrylic resin having one or more carbonyl group in the molecule, a urethane resin, an epoxy resin and the like.

The amount of the polyacrylic hydrazide to be used is such that 0.05 to 2 equivalents, preferably 0.1 to 1 equivalent, of hydrazide group of polyacrylic hydrazide exists per equivalent of reaction portion included in the resin, e.g. aldehyde-based or ketone-based carbonyl group, an epoxy group, an isocyanate group or the like.

The acrylic resin having one or more carbonyl group in the molecule is produced, as by copolymerizing an acrylic monomer having at least one aldehyde-based and/or ketone-based carbonyl group in the monomer and having radically polymerizable unsaturated bond with a radically polymerizable unsaturated monomer copolymerizable with the acrylic monomer.

More specific examples of the acrylic monomer are diacetonacrylamide, diacetone methacrylamide, diacetone acrylate, diacetone methacrylate, acetoacetoxyethyl acrylate, acetoacetoxyethyl methacrylate and so on. Examples of the monomer to be copolymerized with the acrylic monomer are styrene, α-methylstyrene, vinyl naphthalene, vinyl acetate, vinyl propionate, acrylic acid, methyl acrylate, ethyl acrylate, butyl acrylate, cyclohexyl acrylate, 2-ethylhexyl acrylate, stearyl acrylate, 2-hydroxyethyl acrylate, 4-hydroxybutyl acrylate, acrylamide, N-alkylol acrylamide, acrylonitrile, methacrylic acid, methyl methacrylate, ethyl methacrylate, butyl methacrylate, cyclohexyl methacrylate, 2-ethylhexyl methacrylate, stearyl methacrylate, 2-hydroxyethyl methacrylate, 4-hydroxybutyl methacrylate, methacrylamide, N-alkylolmethacrylamide, methacrylonitrile, itaconic acid, maleic acid, 2-methyleneglutamic acid, vinyl halogenate, etc.

Examples of the urethane-based resin are compounds prepared by reaction of polyisocyanate, polyol and hydroxyacrylate or hydroxymethacrylate.

Examples of the polyisocyanate are hexamethylene diisocyanate, isophorone diisocyanate, methylenebis(4-cyclohexyl isocyanate), trimethylhexamethylene diisocyanate, tolylene diisocyanate, xylylene diisocyanate, 4,4'-diphenylmethane diisocyanate, diisocyanate obtained by hydrogenating aromatic isocyanate (e.g. hydrogenated tolylene diisocyanate, hydrogenated xylylene diisocyanate, dicyclohexylmethane diisocyanate, etc.), triphenylmethane triisocyanate, dimethylene triphenyl triisocyanate and like di- or tri-isocyanates, or polyisocyanate obtained by polymerization of the di- or tri-isocyanate.

Examples of the polyol are fatty acid, alicyclic and aromatic polyols, polyester polyols, polyether polyols, etc.

Examples of the aliphatic and alicyclic polyols and polyether polyols are ethylene glycol, 1,4-butanediol, 1,6-hexanediol, diethylene glycol, triethylene glycol, polyethylene glycol, propylene glycol, dipropylene glycol, neopentyl glycol, dimethylol heptane, dimethylolpropionic acid, dimethylolbutanoic acid, trimethylol ethane, trimethylol propane, ditrimethylol propane, pentaerythritol, dipentaerythritol, glycerin, hydrogenated bisphenol A, etc.

Examples of the polyester polyol are caprolactone-modified diol, etc. Examples of the aromatic polyol are ethoxylated bisphenol A, ethoxylated bisphenol S.

Examples of the hydroxyacrylate or hydroxymethacrylate are 2-hydroxyethyl acrylate, 2-hydroxypropyl acrylate, 4-hydroxybutyl acrylate, glycerol acrylate, glycerol diacrylate, pentaerythritol triacrylate, 2-hydroxyethyl methacrylate, 2-hydroxypropyl methacrylate, 4-hydroxybutyl methacrylate, glycerol methacrylate, glycerol dimethacrylate, pentaerythritol trimethacrylate, etc.

Examples of the epoxy-based resin are glycidyl ether-based epoxy resin, glycidyl ester-based epoxy resin, glycidyl amine-based epoxy resin, etc.

Examples of the glycidyl ether-based epoxy resin are bisphenol A-based resin, bisphenol F-based resin, brominated bisphenol A-based resin, hydrogenated bisphenol A-based resin, bisphenol S-based resin, bisphenol AF-based resin, biphenyl-based resin, naphthalene-based resin, fluorene-based resin, phenol novolak-based resin, cresol novolak-based resin, DPP novolak-based resin, trifunctional-based resin, tris-hydroxyphenyl methane-based resin, tetraphenyl ethane-based resin, etc.

Examples of the glycidyl ester-based epoxy resin are hexahydrophthalic acid ester- based resin, phthalic acid ester-based resin, etc.

Examples of the glycidyl amine-based epoxy resin are tetraglycidyl diaminodiphenylmethane, triglycidyl isocyanurate, hydantoin-based resin, 1,3-bis(N,N-diglycidylaminomethyl)-cyclohexane-based resin, aminophenol-based resin, aniline-based resin, toluidine-based resin, etc.

The crosslinking or curing agent of the invention can achieve a remarkable effect as to water resistance, acid resistance and alkali resistance when used for aqueous resins among these resins.

A resin composition can be prepared by mixing these resins and the polyacrylic hydrazide of the invention as the crosslinking or curing agent for resins. The composition can be provided in any form of solid, aqueous solution, and aqueous emulsion. But when used, the composition assumes a form of aqueous solution or aqueous emulsion.

In forming the aqueous solution, the resin and the acrylic acid hydrazide of the invention may be added to water or the aqueous solutions prepared beforehand may be mixed together or the polyacrylic hydrazide of the invention may be added to the aqueous solution of the resin.

In forming the aqueous emulsion, an emulsion of the resin may be prepared using an emulsifier such as a surfactant or the like, and the polyacrylic hydrazide of the invention or an aqueous solution thereof may be added thereto.

The resin composition of the invention may contain additives when required. Examples of such additives are pigments, viscosity adjusters, levelling agents, defoamers, coupling agents, plasticizers, diluents, flame retardants and the like. If necessary, fillers, reinforcements, etc. which were conventionally used can be added.

The resin composition of the invention can be used to coat, adhere or repair metals, wood, synthetic resins, cement, ceramics, knittings or fabrics (glass cloths, etc.) made of inorganic or organic fibers or papers or to produce a molded product from them as the base materials, and is suitable as a coating composition in civil engineering and construction, as an adhesive or as a glue for two-surface tapes, as a coating composition on automotive bodies or parts. A crosslinked or cured film (product) can be produced by spraying or coating the composition or immersing the coating and drying them.

The drying may be done at a temperature of 0°C or higher, preferably about 5 to about 90°C. Although a curing period of about a week at room temperature is preferred, a satisfactorily crosslinked or cured product can be formed by drying at about 20 to about 25°C, i.e. room temperature for about 4 hours or longer.

When a coating operation is carried out at outdoor locations as over the outside walls of bridges, plants, buildings and domestic houses, or outer materials of ships and vehicles, rainfall may occur immediately after application of coating composition and may affect the formation of coating so that especially the use of aqueous coating composition has been limited. The term rainfall resistance to be used in the construction industry refers to a property of coating films remaining stable against rainfall within 24 hours after coating operation. The property is an important factor in choosing the coating composition. The resin composition of the invention is capable of forming a crosslinked or a cured product in a short time which means that it exhibits high rainfall resistance and can be used in a situation which requires outdoor operation. The resulting crosslinked or cured product are remarkable in water resistance, alkali resistance and acid resistance.

### Best Mode for Carrying Out the Invention

The invention is described in more detail with reference to the following examples to which the invention, however, is not limited.

### Example 1

Ten g of polyacrylic amide having an average molecular weight of about 74,000 and 17 ml of water were mixed together to give an aqueous solution. Added thereto was 7.04 g of 100% hydrazine monohydrate and the mixture was stirred for 15 hours at 50 to 56°C. The mixture was poured into methanol in 10-fold amount. Then white precipitate was formed, filtered and taken out. The precipitate was dried, giving polyacrylic hydrazide (Curing agent 1).
Average molecular weight: 85,000
Hydrazide conversion ratio: 49%
Number of hydrazide groups in one molecule: 532

### Example 2

Ten g of polyacrylic amide having an average molecular weight of about 74,000 and 17 ml of water were mixed together to give an aqueous solution. Added thereto was 21.12 g of 100% hydrazine monohydrate and the mixture was stirred for 15 hours at 50 to 55°C. The mixture was poured into methanol in 10-fold amount. Then white precipitate was formed, filtered and taken out. The precipitate was dried, giving polyacrylic hydrazide (Curing agent 2).
Average molecular weight: 86,000
Hydrazide conversion ratio: 85%
Number of hydrazide groups in one molecule: 873

### Example 3

Ten g of polyacrylic amide having an average molecular weight of about 46,000 and 17 ml of water were mixed together to give an aqueous solution. Added thereto was 7.04 g of 100% hydrazine monohydrate and the mixture was stirred for 15 hours at 50 to 56°C. The mixture was poured into methanol in 10-fold amount. Then white precipitate was formed, filtered and taken out. The precipitate was dried, giving polyacrylic hydrazide (Curing agent 3).
Average molecular weight: 70,000
Hydrazide conversion ratio: 50%
Number of hydrazide groups in one molecule: 446

### Example 4

Ten g of polyacrylic amide having an average molecular weight of about 83,000 and 17 ml of water were mixed together to give an aqueous solution. Added thereto was 7.04 g of 100% hydrazine monohydrate and the mixture was stirred for 15 hours at 50 to 56°C. The mixture was poured into methanol in 10-fold amount. Then white precipitate was formed, filtered and taken out. The precipitate was dried, giving polyacrylic hydrazide (Curing agent 4).
Average molecular weight: 107,000
Hydrazide conversion ratio: 47%
Number of hydrazide groups in one molecule: 644

### Example 5

Ten g of polyacrylic amide having an average molecular weight of about 132,000 and 17 ml of water were mixed together to give an aqueous solution. Added thereto was 7.04 g of 100% hydrazine monohydrate and the mixture was stirred for 15 hours at 50 to 56°C. The mixture was poured into methanol in 10-fold amount. Then white precipitate was formed, filtered and taken out. The precipitate was dried, giving polyacrylic hydrazide (Curing agent 5).
Average molecular weight: 149,000
Hydrazide conversion.ratio: 46%
Number of hydrazide groups in one molecule: 880

### Comparative Example 1

A polyacrylic hydrazide (Comparative curing agent 1) was obtained according to the method disclosed in Reference Example 3 of JP 60-23705 B.
Average molecular weight: 10,000
Hydrazide conversion ratio: 49%
Number of hydrazide groups in one molecule: 63

### Comparative Example 2

Ten g of polyacrylic amide having an average molecular weight of about 74,000, 17 ml of water and 17 ml of methanol were mixed together to give an aqueous methanol solution. Added thereto was 7.04 g of 100% hydrazine monohydrate and the mixture was stirred for 15 hours at 50 to 58°C. The mixture was poured into methanol in 10-fold amount. Then white precipitate was formed, filtered and taken out. The precipitate was dried, giving polyacrylic hydrazide (Comparative curing agent 2).
Average molecular weight: 85,000
Hydrazide conversion ratio: 13%
Number of hydrazide groups in one molecule: 151

### Comparative Example 3

Commercially available polyacrylic hydrazide (L type, Otsuka Chemical Co., Ltd.) was used as Comparative curing agent 3. Average molecular weight: 6,000
Hydrazide conversion ratio: 60%
Number of hydrazide groups in one molecule: 45

### Comparative Example 4

Adipic dihydrazide was used as Comparative curing agent 4.

### <Preparation of resin composition>

An emulsion for evaluation was prepared using 0.2 (wt%) of ammonium persulfate as an initiator with a monomer composition of BA/MMA/MAA/DAAM=52.9:43.3:1.5:2.3 (wt%) wherein BA was butyl acrylate: MMA was methyl methacrylate: MAA was methacrylic acid: DAAM was diacetoneacrylamide. An emulsion polymerization was conducted to give an emulsion with 45% solids.

The curing agent 1 was added to the emulsion for evaluation in an amount of equivalent to ketone groups of DAAM in the emulsion, whereby it was dissolved, giving a resin composition 1.

In the same manner, by the above process using curing agents 2 to 5 and comparative curing agents 1 to 4, resin compositions 2 to 5 and comparative resin compositions 1-4 were prepared.

### Test Example 1 (Water resistance test 1)

The resin composition 1 was applied to a glass plate (150 X 70 X 1 mm) (to a thickness of 5 mils). The coated glass was dried at 80°C for 10 minutes and thereafter at 22 to 24°C and a humidity of 18 to 22% for 15 hours, giving a transparent film. The film was immersed in water (deionized water) at 23 to 25°C. In 7 days, the film was visually inspected, and degree of blushing was evaluated. Coating films were further formed using resin compositions 2 to 5 and comparative resin compositions 1 to 4 in the same manner. Tests were conducted with the results shown in Table 1.

Ten points were indicated to show the film which underwent no change.

One point was indicated to show the film having marked blushing. The degree of blushing was expressed at ten stages.

**Table 1**

| | After 7 days |
|---|---|
| Resin composition : 1 | 10 |
| Resin composition : 2 | 10 |
| Resin composition : 3 | 8 |
| Resin composition : 4 | 9 |
| Resin composition : 5 | 8 |
| Comparative resin composition: 1 | 3 |
| Comparative resin composition: 2 | 1 * |
| Comparative resin composition: 3 | 2 |
| Comparative resin composition: 4 | 1 * |

| | |
|---|---|
| *The coating films of comparative resin compositions 2 and 4 had "peelings". | |

The coating films of resin compositions 1 and 2 showed no change when the test was continued after 20 days.

### Test Example 2 (Water resistance test 2)

As to the resin compositions 1 and 2 and comparative resin compositions 2 to 4 prepared in the test example 1, the tests were conducted. The coating films were immersed in water at 50°C, and the films were visually inspected for blushing 1 day, 2 days, 4 days and 7 days after immersion to check the blushing. The evaluation was performed in the same manner as in Test Example 1. The results are shown in Table 2.

**Table 2**

| | After 1 day | After 2 days | After 4 days | After 7 days |
|---|---|---|---|---|
| Resin composition 1 | 10 | 9 | 5 | 4 |
| Resin composition 2 | 10 | 10 | 9 | 8 |
| Comparative resin composition 2 | 1* | - | - | - |
| Comparative resin composition 3 | 2 | 1 | - | - |
| Comparative resin composition 4 | 1* | - | - | - |

| | | | | |
|---|---|---|---|---|
| "-" means that the test was completed and the result was not evaluated. * Peeling has occurred in the coating film after one day of the comparative resin composition 2, after 1 day of the comparative resin composition 4 and after two days of the comparative resin composition 3. | | | | |

### Test Example 3 (Water resistance test 3)

The resin composition 1 was applied to a glass plate (150 X 70 X 1 mm) (to a thickness of 5 mils). The coated glass was dried at a specified temperature and for a specified time, and immediately a water drop of 1 cm in diameter was placed using a Pasteur pipet. The drop was covered with watch glass to prevent vaporization of water drop. The film was visually inspected for blushing one day, 3 days, 5 days and 7 days thereafter. The evaluation was made in the same manner as in test example 1.

In the same manner, using the resin composition 2 and comparative resin composition 4, films were formed and tested. The results are tabulated in Table 3.

**Table 3**

| | drying Temp. | drying time | after 1 day | after 3 days | after 5 days | After 7 days |
|---|---|---|---|---|---|---|
| Resin composition 1 | 20 -25°C | 1 hr | 8 | 8 | 8 | 8 |
| | | 4 hr | 10 | 10 | 10 | 9 |
| | | 24 hr | 10 | 10 | 10 | 10 |
| | | 7 day | 10 | 10 | 10 | 10 |
| | 40°C | 5 min | 8 | 8 | 8 | 8 |
| | 80°C | 5 min | 10 | 10 | 10 | 10 |
| Resin composition 2 | 20-25°C | 1 hr | 9 | 9 | 9 | 9 |
| | | 4 hr | 10 | 10 | 10 | 9 |
| | | 24 hr | 10 | 10 | 10 | 10 |
| | | 7 day | 10 | 10 | 10 | 10 |
| | 40°C | 5 min | 10 | 10 | 9 | 8 |
| | 80°C | 5 min | 10 | 10 | 10 | 10 |
| Comparative resin composition 4 | 20-25°C | 1 hr | 1* | 1* | 1* | 1* |
| | | 4 hr | 1* | 1* | 1* | 1* |
| | | 24 hr | 10 | 4* | 1* | 1* |
| | | 7 day | 10 | 8* | 4* | 1* |
| | 40°C | 5 min | 1* | 1* | 1* | 1* |
| | 80°C | 5 min | 10 | 8* | 4* | 1* |

| | | | | | | |
|---|---|---|---|---|---|---|
| *Blisters occurred in the coating film. | | | | | | |

### Test Example 4 (Acid resistance test)

The resin composition 1 was applied to a glass plate (150 X 70 X 1 mm) (to a thickness of 5 mils). The coated glass was dried at a specified temperature and for a specified time, and immediately a drop of 3N-HCl aqueous solution of 1 cm in diameter was placed using a Pasteur pipet. The drop was covered with watch glass to prevent vaporization of water drop. The film was visually inspected for blushing one day, 3 days, 5 days and 7 days thereafter. The evaluation was made in the same manner as in test example 1.

In the same manner, using the resin composition 2 and comparative resin composition 4, films were formed and tested. The results are tabulated in Table 4.

**Table 4**

| | drying Temp. | drying time | after 1 day | after 3 days | after 5 days | After 7 days |
|---|---|---|---|---|---|---|
| Resin composition 1 | 20-25°C | 1 hr | 10 | 8 | 7 | 5 |
| | | 4 hr | 10 | 10 | 10 | 9 |
| | | 24 hr | 10 | 10 | 10 | 10 |
| | | 7 day | 10 | 10 | 10 | 10 |
| | 40°C | 5 min | 10 | 9 | 7 | 7 |
| | 80°C | 5 min | 10 | 10 | 10 | 9 |
| Resin composition 2 | 20-25°C | 1 hr | 10 | 8 | 7 | 5 |
| | | 4 hr | 10 | 10 | 10 | 9 |
| | | 24 hr | 10 | 10 | 10 | 10 |
| | | 7 day | 10 | 10 | 10 | 10 |
| | 40°C | 5 min | 10 | 10 | 9 . | 8 |
| | 80°C | 5 min | 10 | 10 | 10 | 9 |
| Comparative resin composition 4 | 20-25°C | 1 hr | 1* | 1* | 1* | 1* |
| | | 4 hr | 1* | 1* | 1* | 1* |
| | | 24 hr 24 hr | 9 | 4* | 1* | 1* |
| | | 7 day | 9 | 6* | 4* | 1* |
| | 40°C | 5 min | 1* | 1* | 1* | 1* |
| | 80°C | 5 min | 9 | 8* | 4* | 1* |

| | | | | | | |
|---|---|---|---|---|---|---|
| * Blisters occurred in the coating film. | | | | | | |

### Test Example 5 (Alkali resistance test)

The same test as Test Example 4 was conducted except that 3N-HCl aqueous solution was replaced by 3N-NaOH aqueous solution. The results are tabulated in Table 5.

**Table 5**

| | drying Temp. | drying time | after 1 day | after 3 days | after 5 days | After 7 days |
|---|---|---|---|---|---|---|
| Resin composition 1 | 20-25°C | 1 hr | 10 | 10 | 10 | 10 |
| | | 4 hr | 10 | 10 | 10 | 10 |
| | | 24 hr | 10 | 10 | 10 | 10 |
| | | 7 day | 10 | 10 | 10 | 10 |
| | 40°C | 5 min | 10 | 10 | 10 | 10 |
| | 80°C | 5 min | 10 | 10 | 10 | 10 |
| Resin composition 2 | 20-25°C | 1 hr | 10 | 10 | 10 | 10 |
| | | 4 hr | 10 | 10 | 10 | 10 |
| | | 24 hr | 10 | 10 | 10 | 10 |
| | | 7 day | 10 | 10 | 10 | 10 |
| | 40°C | 5 min | 10 | 10 | 10 | 10 |
| | 80°C | 5 min | 10 | 10 | 10 | 10 |
| Comparative resin composition 4 | 20-25°C | 1 hr | 1* | 1* | 1* | 1* |
| | | 4 hr | 1* | 1* | 1* | 1* |
| | | 24 hr | 10 | 4* | 1* | 1* |
| | | 7 day | 10 | 8* | 4* | 1* |
| | 40°C | 5 min | 1* | 1* | 1* | 1* |
| | 80°C | 5 min | 10 | 8* | 4* | 1* |

| | | | | | | |
|---|---|---|---|---|---|---|
| * Blisters occurred in the coating film. | | | | | | |

### Industrial Applicability of the Invention

The crosslinking agent or curing agent of the invention can provide a resin coating film which can be dried in a shorter time during crosslinking or curing of the resin and which shows an excellent effect as to water resistance, acid resistance and alkali resistance. Especially when they are applied to an aqueous resin, they achieve remarkable effects of short-time drying and high water resistance.

## Claims

1. A crosslinking agent or a curing agent for resins, the agent containing as an active component a polyacrylic hydrazide having a number average molecular weight of 70,000 to 150,000, a hydrazide conversion ratio of at least 45% and 400 or more hydrazide groups in one molecule.

2. A crosslinking agent or a curing agent for resins according to claim 1, the agent containing as an active component a polyacrylic hydrazide having a number average molecular weight of 80,000 to 110,000, a hydrazide conversion ratio of at least 45% and 450 or more hydrazide groups in one molecule.

3. A crosslinking agent or a curing agent for resins according to claim 2, the agent containing as an active component a polyacrylic hydrazide having a number average molecular weight of 80,000 to 90,000, a hydrazide conversion ratio of at least 50% and 500 or more hydrazide groups in one molecule.

4. A resin composition comprising at least one kind of resin selected from an acrylic resin having at least one carbonyl group in the molecule, a urethane resin and an epoxy resin, and the crosslinking agent or the curing agent as defined in any one of claims 1 to 3.

5. A crosslinked or cured product formed by crosslinking or curing at least one kind of resin selected from an acrylic resin having at least one carbonyl group in the molecule, a urethane resin and an epoxy resin using the crosslinking agent or the curing agent as defined in any one of claims 1 to 3.

## Patentansprüche

1. Vernetzungsmittel oder Härtungsmittel für Harze, wobei das Mittel als eine Aktivkomponente ein Polyacrylhydrazid mit einem Zahlenmittel des Molekulargewichts von 70.000 bis 150.000, einem Hydrazid-Umwandlungsverhältnis von mindestens 45% und 400 oder mehr Hydrazidgruppen in einem Molekül enthält.

2. Vernetzungsmittel oder Härtungsmittel für Harze nach Anspruch 1, wobei das Mittel als eine Aktivkomponente ein Polyacrylhydrazid mit einem Zahlenmittel des Molekulargewichts von 80.000 bis 110.000, einem Hydrazid-Umwandlungsverhältnis von mindestens 45% und 450 oder mehr Hydrazidgruppen in einem Molekül enthält.

3. Vernetzungsmittel oder Härtungsmittel für Harze nach Anspruch 2, wobei das Mittel als eine Aktivkomponente ein Polyacrylhydrazid mit einem Zahlenmittel des Molekulargewichts von 80.000 bis 90.000, einem Hydrazid-Umwandlungsverhältnis von mindestens 50% und 500 oder mehr Hydrazidgruppen in einem Molekül enthält.

4. Harzzusammensetzung, umfassend mindestens eine Art von Harz ausgewählt aus einem Acrylharz mit mindestens einer Carbonylgruppe im Molekül, einem Urethanharz und einem Epoxyharz und das Vernetzungsmittel oder Härtungsmittel wie in irgendeinem der Ansprüche 1 bis 3 definiert.

5. Vernetztes oder gehärtetes Produkt, gebildet durch Vernetzen oder Härten mindestens einer Art von Harz ausgewählt aus einem Acrylharz mit mindestens einer Carbonylgruppe im Molekül, einem Urethanharz und einem Epoxyharz unter Verwendung des Vernetzungsmittels oder Härtungsmittels wie in irgendeinem der Ansprüche 1 bis 3 definiert.

## Revendications

1. Agent de réticulation ou agent de durcissement pour résines, l'agent contenant en tant que composant actif un hydrazide polyacrylique ayant une masse moléculaire moyenne en nombre de 70 000 à 150 000, un taux de conversion en hydrazide d'au moins 45 % et 400 groupes hydrazides ou plus dans une molécule.

2. Agent de réticulation ou agent de durcissement pour résines selon la revendication 1, l'agent contenant en tant que composant actif un hydrazide polyacrylique ayant une masse moléculaire moyenne en nombre de 80 000 à 110 000, un taux de conversion en hydrazide d'au moins 45 % et 450 groupes hydrazides ou plus dans une molécule.

3. Agent de réticulation ou agent de durcissement pour résines selon la revendication 2, l'agent contenant en tant que composant actif un hydrazide polyacrylique ayant une masse moléculaire moyenne en nombre de 80 000 à 90 000, un taux de conversion en hydrazide d'au moins 50 % et 500 groupes hydrazides ou plus dans une molécule.

4. Composition de résine comprenant au moins une sorte de résine choisie parmi une résine acrylique ayant au moins un groupe carbonyle dans la molécule, une résine uréthane et une résine époxy, et l'agent de réticulation ou l'agent de durcissement tels que défini dans l'une quelconque des revendications 1 à 3.

5. Produit réticulé ou durci formé par réticulation ou durcissement d'au moins une sorte de résine choisie parmi une résine acrylique ayant au moins un groupe carbonyle dans la molécule, une résine uréthane et une résine époxy en utilisant l'agent de réticulation ou l'agent de durcissement tels que définis dans l'une quelconque des revendications 1 à 3.
